# EUROPEAN PATENT APPLICATION

(11) **EP 4 601 149 A1**
(43) Date of publication of application: **13.08.2025**
(21) Application number: 24156617.3
(22) Date of filing: 08.02.2024
(51) Int. Cl.: H02J 7/00, H02J 3/32

(54) **BALANCING OF ENERGY STORAGE UNITS IN AN ENERGY STORAGE SYSTEM VIA AN AUXILIARY MODULE POWER SUPPLY**

(71) Applicant: Hitachi Energy Ltd, 8050 Zürich (CH)
(72) Inventor: ASOODAR, Mohsen, 164 56 Stockholm (SE)
(74) Representative: AWA Sweden AB

(57) **Abstract**

There is disclosed herein an energy storage system, ESS, for providing energy support to a power grid, comprising a plurality of energy storage units, ESUs, (410) configured to store electrical energy. The ESS further comprises one or more auxiliary modules (412) configured to provide auxiliary functions for at least one of the plurality of ESUs (410), and a controller configured to balance the energy stored in the ESUs (410) by varying a degree to which the auxiliary modules (412) draw power from the ESUs (410) via an internal APS (422), or from an external power source (428) via an external APS (426). Alternatively or in addition to discharging the load power through a balancing resistor or the like, the load power drawn from the ESUs (410) at least partially powers the auxiliary functions of the one or more auxiliary modules (412). Thus, the balancing of ESUs (410) in the ESS can be affected more quickly, thereby improving the maintenance of the ESS at a preferred state of charge.

## Description

### Technical field

The present disclosure generally relates to electrical energy storage systems. More particularly, the present disclosure relates to an improved technique for balancing the energy stored among energy storage units of an electrical energy storage system.

### Background

Energy storage systems (ESSs) are systems for storing electrical energy in bulk. The electrical energy may have been generated by inconsistent generating means and, thus, ESSs conveniently provide a way to store generated electrical energy for later use, as desired, even if the generating means themselves are offline. As such, ESSs may form an important part of a renewable energy distribution grid comprising, for example, solar or wind generation.

ESS systems store excess energy during periods of low demand and release it during high-demand periods, ensuring grid stability and efficient resource utilization. While various energy storage technologies, including lithium-ion batteries, supercapacitors, have made significant advancements, the operation of ESS systems still poses some challenges.

### Summary

The present disclosure relates to an ESS, comprising an energy storage circuit including a string of interconnected ESUs, configured to store electrical energy and provide power to a power grid using said stored electrical energy.

One challenge posed by such an ESS system is the need for balancing energy storage units within a multi-unit energy storage system. Balancing is the process of equalizing the state of charge (SoC) or voltage across individual storage units within the system. This is vital for several reasons:
Balanced storage units operate more efficiently, as energy can be more evenly distributed and utilized, reducing the risk of overcharging or over-discharging individual units;
Effective balancing reduces the strain on individual units, promoting longer operational lifespans, which is crucial given the substantial capital investment involved in power-grid level energy storage;
Balanced units contribute to grid stability by preventing overloads, reducing voltage fluctuations, and aiding in fast response to sudden load changes or disturbances; and
Balanced units maximize the energy throughput of the entire system, helping grid operators extract the full potential of their energy storage assets.

Conventionally, balancing may be achieved through the use of balancing resistors to dissipate excess energy from charged ESUs. While simple and cost-effective, such passive balancing methods are often less precise and less efficient in redistributing energy, leading to energy being wasted by being converted into heat.

In a typical ESS, auxiliary modules accompany ESUs to optimize performance and ensure safety. These modules host auxiliary electronics, including monitoring systems, safety measures, communication interfaces, fault detection, and more. They play a pivotal role in managing ESU operation, safety, and integration with the grid. Auxiliary functions range from data collection and safety protocols to managing cell balancing and reporting to a higher ESS control system.

It is realized as a part of the present disclosure that the power required to power these auxiliary functions can be drawn from the ESUs themselves, and that such a drawing of power can be tailored in a way that simultaneously enhances balancing of the energy stored in the ESUs. In this way, the energy discharged during balancing is not all wasted (e.g., as heat in a resistor) but is used for useful purposes of carrying out auxiliary functions for the ESU.

That is, according to an aspect of the present disclosure, there is provided an energy storage system (ESS) for providing energy support to a power grid, comprising a plurality of energy storage units (ESUs) configured to store electrical energy, and one or more auxiliary modules configured to provide auxiliary functions for at least one of the plurality of ESUs.

An ESU may contain a plurality of energy storage cells, such as capacitors, and associated circuitry for interconnection of the capacitors, etc., and an auxiliary module (AM) associated with the ESU may be responsible for the monitoring and control of the ESU, and may contain one or more sensors, processing devices, protective devices, and/or other electrical components. Accordingly, it will be understood that the auxiliary module will require an amount of electrical power to carry out its auxiliary functions for its associated ESU.

An auxiliary module of the one or more auxiliary modules is powered by an internal auxiliary power supply, APS, coupled to the ESU. The internal APS may be configured in any suitable way as to enable a drawing of power from the ESU to power the auxiliary module. For example, the internal APS may comprise a DC-DC power supply module (power converter) and/or a power transformer.

The ESS further comprises a controller configured at least to balance the energy stored in the ESUs. The controller may be further configured to perform other functions for the ESUs, depending on the implementation. The balancing of the energy stored in the ESUs may comprise adjusting the amount of energy stored in one or more ESUs in a group (e.g., a string) of ESUs so that all of the ESUs have substantially the same amount of energy stored therein. The balancing operation may be carried out at any time, e.g., in response to detecting a threshold difference between energy storage in different ESUs, or at regular time intervals, depending on the implementation.

According to a particularly advantageous aspect of the present disclosure, the controller is configured to balance the energy stored in the ESUs by selectively drawing power from said at least one of the plurality of ESUs via the internal APS. Hence, if, for example, an ESU of a group of ESUs has a higher voltage level (state of charge) than other ESUs in the group, said ESU can be effectively and rapidly discharged through powering the auxiliary functions of the auxiliary module.

Such a balancing scheme contrasts to comparative examples utilizing only, for example, a balancing resistor, in that the energy stored in the ESU is discharged through useful work, rather than only being dissipated through heat. In preferred examples, the powering of the auxiliary module to discharge and thereby balance an ESU may be carried out in combination with the engagement of a balancing resistor (e.g., by switching in the balancing resistor via semiconductors switches or the like), so as to enact the balancing even more rapidly. By increasing the speed of the balancing operation, the health of the ESS can be more effectively preserved.

Each ESU may have a voltage level and, in a string of ESUs, the controller may be configured to equalize (i.e., balance) the voltage of all series-connected ESUs, by selectively discharging certain ESUs (at least one ESU) that has/have a higher voltage/SoC to thereby reduce its voltage faster than that of the other ESUs.

Here, for selectively discharging the at least one ESU, the controller may identify the at least one ESU that is out of balance/unbalanced. The controller can determine the unbalanced ESU based on, for example, its voltage, SoC, state of charge, and/or SoH, state of health, (which may be measured values available to the controller from a measurement module) and cause drawing of power by consuming some power from the ESU and feeding it to the auxiliary modules.

The rate of discharge may be governed by connection and disconnection of the auxiliary module to draw power from the at least one ESU, where the power consumed by the auxiliary module may be nearly constant. The controller determines when to connect and disconnect based on volage/SoC/SoH values.

For example, when an ESU is out of balance, the auxiliary module may be controlled by the controller to draw power from the ESU and, when the ESU is in balance, the controller may then control the auxiliary module to stop drawing power from the ESU. 'Selectively' discharging may mean, in this context, determining the at least one out of balance ESU and/or the control of the power drawn by the auxiliary modules from the ESUs.

In some example implementations, a balancing resistor may be included in the auxiliary module, to increase the power consumed by the auxiliary module during operation thereof. Hence, the load drawn by the auxiliary module may be increased to further increase the rate of balancing of the ESU. Arranging the balancing resistor in the auxiliary module may further enable a more compact arrangement for the ESS.

The balancing resistor may be selectively engaged or varied based on a desired power consumption of the auxiliary module. Thus, the power consumed by the auxiliary module may be dynamically varied (e.g., by the controller) according to the rate at which the ESU is desired to be balanced.

In some cases, the amount of power drawn by the auxiliary module from the ESU may be changeable or too low to fully enable the auxiliary functions of the auxiliary module to be carried out. Therefore, in preferred examples, the ESS further comprises an external APS configured to provide power from an external power source, wherein the auxiliary module is additionally powered by the external APS, coupled to the external power source. Such a configuration is further advantageous in that the auxiliary module can be powered even if the ESU has no charge, thus allowing the auxiliary module to provide protective and other functionality to the ESS during a black start operation.

In some examples, the external power source may sit at the same voltage as the ESU (which may be in the order of kilovolts (kVs) or tens of kVs, or hundreds of kVs). In other examples, the external power source is a grounded power supply, and the external APS galvanically isolates the ESU from the grounded power supply. The galvanic isolation may be provided via, for example, a transformer arrangement, wireless power transfer, or the like.

The auxiliary module may have a relatively low voltage power requirement (e.g., 12V, 24V, etc.), and thus the internal and/or external APS may be configured accordingly.

The auxiliary module may be simultaneously connected to the internal APS and the external APS via a redundancy module, which regulates an amount of power drawn from each of the internal APS and the external APS. In a simple format, the redundancy module may comprise a pair of diodes configured to respectively connect each of the internal APS and the external APS to the auxiliary module. The redundancy module would thus take the energy from the power supply that has the highest input voltage. For example, if the internal APS has a voltage of 27 volts and the external APS has a voltage of 24 volts, the redundancy module would take the entire current from the internal APS while no current would be taken from the external APS. If, however, the internal APS is switched off, the flow of auxiliary energy will naturally commutate from the internal APS to the external APS.

The redundancy module may be passive (i.e., using diodes) or active, and may include semiconductor switches such as MOSFETs to reduce conduction losses, and enable a controlled switching of power sourcing between the internal and external APSs. The redundancy module may also be configured to be somewhere in between fully sourcing power from the internal APS and fully sourcing power from the external APS. That is, the power may be shared between the internal APS and the external APS.

In an example where the internal APS is configured as a DC-DC power supply, the DC-DC power supply may be configured with an output voltage to the redundancy module that is higher than the voltage of the grounded power supply. To demonstrate with a specific example, the DC-DC power supply is set to be at 29 volts while the external APS has a droop voltage ranging from 29 to 24 volts. When the DC-DC power supply is switched on (i.e., connected to the auxiliary module), the auxiliary module still takes the majority of the current from the DC-DC power supply, however, when the DC-DC power supply switches off (disconnected from the auxiliary module), all the power is taken from the external APS. A benefit of such an arrangement is thus that the load power consumption is not interrupted when switching on/off the DC-DC power supply. The energy transfer naturally commutates from the external APS to the DC-DC power supply and vice-versa.

The controller may therefore be configured to turn on the DC-DC power supply in response to determining that the ESU is to be balanced, and/or turn of the ESU, e.g., in response to a determination that the ESU has been suitably balanced.

According to a further aspect of the present disclosure, there is provided a method for controlling the energy stored in ESUs of an ESS (such as that described above), comprising a step of determining that an ESU is to be discharged as part of a balancing procedure and, in response to determining that the ESU is to be discharged, selectively drawing power from the ESU via an internal APS coupling said ESU to an auxiliary module such that the auxiliary module is powered by the drawn power.

The method may be carried out by a controller of the ESU, which may be embodied as a processing device, with storage of instructions which, when carried out by the processing device, cause the processing device to perform the above method.

According to yet a further aspect of the present disclosure, there is provided a converter station comprising an ESS such as that described above.

The solutions described herein may be applied to any power grid system that provides power to and/or source power from ESSs. By improving the safety and reliability of ESSs, the presently described solutions may consequently enhance the reliability of any power grid system in which they are installed.

### Brief description of the drawings

Exemplifying embodiments will now be described in more detail, with reference to the following appended drawings, wherein:
Figure 1 schematically shows an example energy storage system comprising a number of cabinets;
Figure 2 schematically shows a detailed view of one of the cabinets shown in figure 1, revealing a plurality of energy storage units and an enhanced view of one of the energy storage units;
Figure 3 schematically shows an example APS configuration for coupling energy storage units to auxiliary modules;
Figure 4 schematically shows another example APS configuration for coupling energy storage units and an external power source to auxiliary modules;
Figure 5 illustrates a method for controlling the energy stored in energy storage units of an energy storage system, according to an example, and
Figure 6 schematically shows a power station, according to an example implementation of the presently disclosed energy storage system.

### Detailed description

The present disclosure is laid out in the following by way of a number of illustrative examples. It will be appreciated that these examples are provided for illustration and explanation only and are not intended to be limiting on the scope of the present disclosure. Instead, the scope of the present disclosure is to be defined by the appended claims. Furthermore, although the examples may be presented in the form of individual embodiments, it will be recognized that the disclosure also covers combinations of the embodiments described herein.

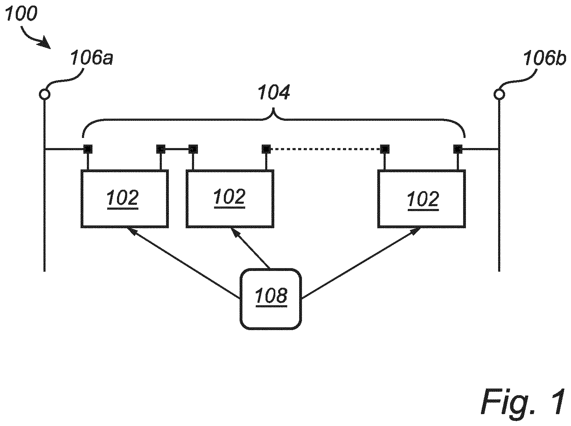

Figure 1 schematically shows an energy storage system 100 according to an embodiment of the present disclosure. The energy storage system 100 (ESS 100) may comprise a plurality of energy storage cabinets 102 (or simply 'cabinets 102') in a series connection, to form a bank 104 of energy storage cabinets 102 and thereby provide a modularized ESS 100.

The bank 104 of cabinets 102 may be connected between terminals 106a and 106b such that the bank 104 can be collectively charged and discharged via said terminals 106a, 106b. For example, the terminals 106a, 106b may be connected to a power grid and/or electrical energy generating means (not shown) such that the ESS 100 may store electrical energy (from electrical energy generating means and/or the power grid) and provide power to the power grid using said stored electrical energy.

It will be appreciated that, although only one series-connected bank 104 is shown, further banks 104 may be provided, connected either in series or parallel to the illustrated bank 104, between the terminals 106a, 106b.

The ESS 100 may further comprise a control unit 108 configured to provide various control functions for the ESS 100 such as power management, monitoring, and similar such functions. The control unit 108 may be local or remote to the bank 104 of cabinets 102 and may be connected (i.e. power and/or data connected) via any suitable wired or wireless means.

In an example implementation, the electrical generating means may comprise inconsistent renewable electrical energy generating means, such as wind turbines, solar panels, or the like, which do not generate electricity consistently. In such an implementation, the ESS 100 may advantageously be charged (i.e. provided with electrical energy, e.g. via the terminals 106a, 106b) by the electrical energy generating means during a time when electrical generation exceeds the demand from the power grid (i.e. it is not used immediately). The electrical energy may then be stored in the ESS 100 for later use.

Accordingly, at a time when the demand from a power grid exceeds the provision capacity of the electrical energy generating means, the supply of electrical energy may be supplemented using the electrical energy stored in the ESS 100. For example, the terminals 106 may be connected to a converter device (such as a STATCOM), which is configured for providing power to the power grid. Hence, a more flexible power grid may be provided by incorporating an ESS 100 in accordance with the present disclosure.

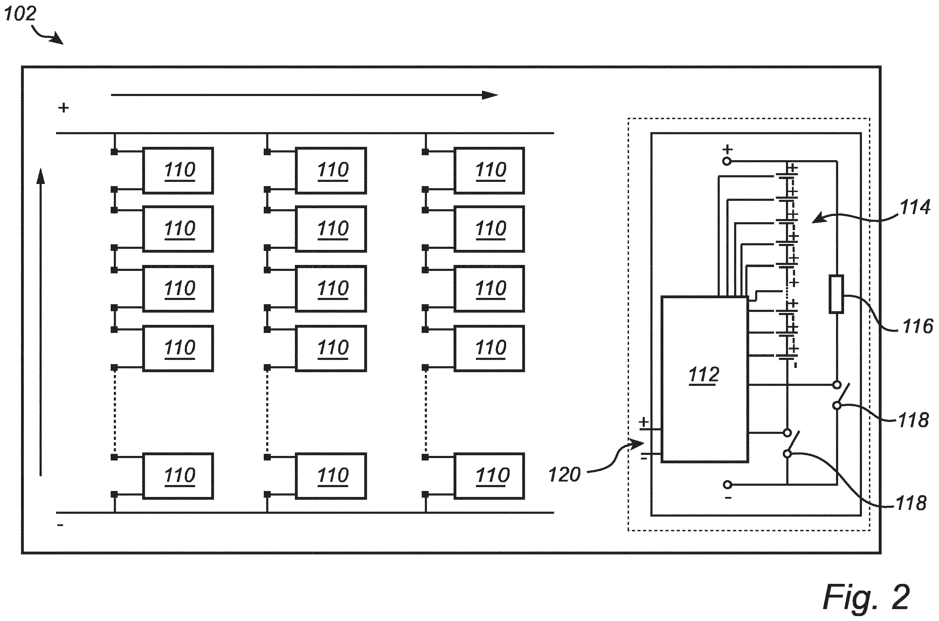

An example configuration of a cabinet 102 such as those shown in figure 1 is shown in figure 2. As illustrated, a cabinet 102 may comprise a plurality of energy storage units 110 (ESUs 110) arranged into one or more strings, wherein a number of strings of ESUs 110 may be connected, for example, in parallel to each other.

An example internal configuration of an ESU 110 is shown in an enlarged view, revealing an auxiliary module 112 (AM 112) configured to provide auxiliary functions for the ESU 110. The ESU may further comprise a plurality of cells 114, which may be (super)capacitors, batteries, or the like, and a protection and bypass system, which may comprise a discharge resistor 116 and a plurality of switches 118.

It will be appreciated that the protection and bypass system illustrated in figure 2 is just an example of possible systems that may be incorporated into the ESUs 110 for control and/or protection of power flow. Sensors, monitors, fuses, and/or other control, protection, or monitoring devices may also be included, depending on the particular implementation.

As illustrated by the dashed lines therefrom, the AM 112 may be configured to monitor and/or control one or more of the various internal components of the ESU 110. For example, the AM 112 may be communicatively coupled to each cell 114 and each switch 118 so as to identify faults (or failures or other interruptions, unintentional or otherwise) of cells 114 and take an appropriate action in response thereto.

To take one example, an AM 112 may monitor the health of the cells 114. If the AM 112 detects failure of a cell 114, the AM 112 may control one or more of the switches 118 to bypass the faulty cell(s) 114 (e.g. just the failed cell or a group of cells containing the failed cell 114), and the AM 112 may further connect the faulty cell(s) 114 to the discharge resistor 116 to thereby discharge the faulty cell(s) 114 and thus render the ESU 110 safer for maintenance, removal, or replacement.

As such, it will be appreciated that a proper functioning of AMs 112 may be important for the safe and reliable function of the ESS 100. Failures of cells 114 in ESUs 110 and other such potential faults in cabinets 102 may be more likely to occur during an energization of the ESS 100 (e.g. during initial charging thereof). Therefore, it may be preferable to ensure that the auxiliary functions provided by the AM 112 are operational before initiating such energization.

Hence, it may be preferred to constantly provide power to the AM 112, e.g. via AM power connection 120, or at least ensure that the power provided to the AM 112 is available before and/or throughout energization of the ESU 110.

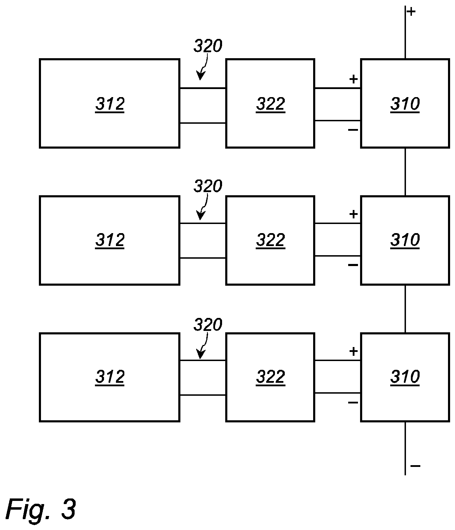

Figure 3 schematically shows an example APS configuration for coupling energy storage units (ESUs) 310 to auxiliary modules (AMs) 312 via an AM power supply 320, wherein the components having reference numerals separated by a multiple of one hundred (100) from the reference numerals used in figures 1 and 2 may be the same or similar to, at least in their function, the components indicated by the previously used reference numerals (for example, ESUs 110 in figure 2 and ESUs 310 in figure 3). Therefore, the specifics of such components in the later figure(s) are not discussed again in detail. The same applies for subsequently described figures.

In the illustrated system of figure 3, the ESUs 310 are coupled to the auxiliary modules 312 via an internal APS 322 configured as a power supply such as a DC-DC power supply for providing power to the AMs 312 via their respective power connections 320. Instead of a DC-DC power supply, a different configuration may be used, such as an AC-DC-DC power supply, or a different form of active power supply unit.

In such an example, the auxiliary modules 312 may not be required to be powered by the ESUs 310 constantly, in which case an intermittent connection may be acceptable (e.g., to update monitoring information or the like). Hence, the internal APS 322 may selectively connect and/or disconnect the AMs 312 from their respective ESUs 310 based on a balancing requirement for one or more of the ESUs 310. For example, an ESU 310 may be disconnected from its associated AM 312 such that it is discharged at a slower rate than the other ESUs 310, or vice versa.

As used here, the `selective' connection of the AMs 312 to ESU 310 is intended to refer to a configuration wherein one or more of the AMs 312 may source power from their corresponding ESU 310, via the internal APS 322, while one or more other AMs are not sourcing power from their corresponding ESU 310 (e.g., sourcing power via an external APS instead), thereby resulting in a potentially variable power being drawn from each ESU 310 and hence facilitating the balancing of the ESUs 310. The electrical connection between an AM and an ESU may be preserved even in an event where the AM is not sourcing power from the ESU.

In another example, one or more of the AMs 312 may comprise a balancing resistor (e.g., a selectively connectable or variable resistor) that may be controlled according to a balancing need for one or more of the ESUs 310. For example, a balancing resistor in an AM 312 may be connected or varied (e.g., under control by a controller) to increase its resistance in response to a determination that the ESU 310 associated with the AM 312 requires discharging for balancing. Thus, the AM 312 may draw a greater power than the other AMs 312, thus causing the associated ESU 310 to discharge faster than the other ESUs 310.

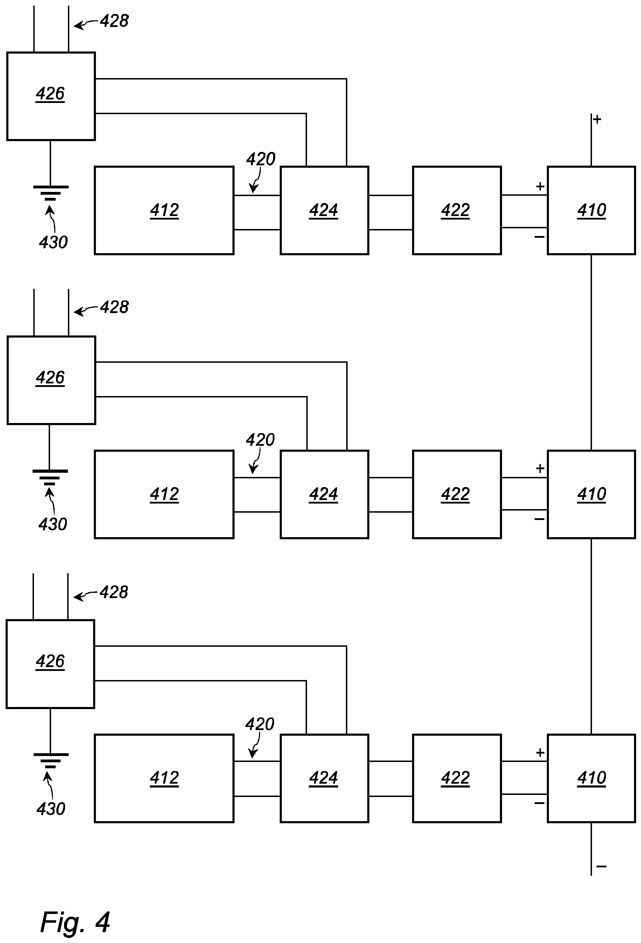

Figure 4 schematically shows another example APS configuration for coupling energy storage units 410 and an external power source 428 to auxiliary modules 412. A primary difference between the APS configuration shown in figure 4, from that shown in figure 3, is that the configuration shown in figure 4 further comprises an external power source 428, which is grounded (connected to ground 430) and connected to the auxiliary module 412 via an external APS 426.

The internal APS 422 and the external APS 426 are both connected to the auxiliary module 412 via a redundancy module 424, which enables either a selective connection to either the internal APS 422 or the external APS 426, or a shared power supply to be drawn from both the internal APS 422 and the external APS 426.

The external APS 426 is configured to galvanically isolate the rest of the ESS components from ground 430. This APS 426 may step voltage from the source 428 (e.g., 240Vac or 240Vdc) to supply (e.g., 12Vdc or 24Vdc).

The redundancy module 424 is preferably configured so that the power can be shared between the internal APS 422 (configured as a DC-DC power supply) and the external APS 426 when the internal APS 422 is switched on. In an example, it can be assumed that the AM power supply 420 requires 24V. In this case, the DC-DC power supply of the internal APS 422 is set to be at 29 volts while the external APS 426 has a droop voltage ranging from 29 to 24 volts. When the internal APS 422 is switched on, the auxiliary module 412 still takes the majority of the current from the internal APS 422, however, when the internal APS 422 switches off, all the power is taken from the external APS 426. Thus, the load power consumption is not interrupted when switching on/off the internal APS 422.

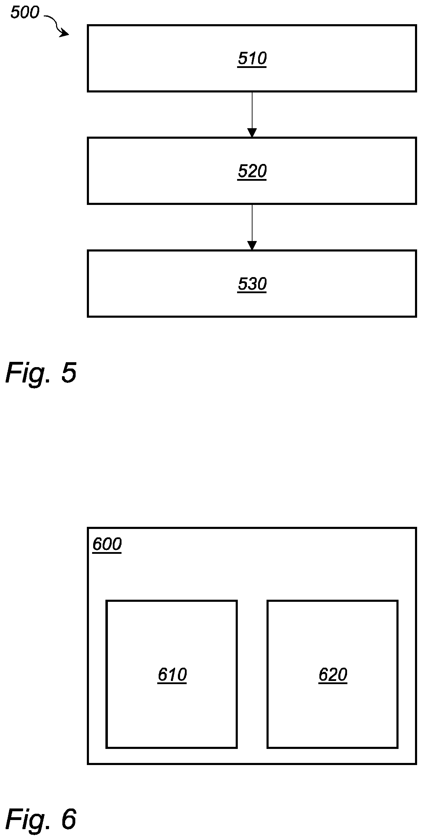

Figure 5 illustrates a method 500 for controlling the energy stored in energy storage units of an energy storage system, according to an example. The method 500 comprises determining 510 that an ESU is to be discharged as part of a balancing procedure and, in response to determining that the ESU is to be discharged, selectively drawing 520 power from the ESU via an internal APS coupling said ESU to an auxiliary module such that the auxiliary module is powered 530 by the drawn power.

The method 500 may comprise further steps that are not illustrated, such as disconnecting the internal APS from the ESU once the ESU has been balanced.

The method 500 may be carried out by a controller having a processing device and a memory. The memory may store instructions that, when carried out by the processing device, cause the processing device to carry out the method. That is, the method 500 may be a computer-implemented method, and may further be embodied as a transitory or non-transitory computer-readable medium, and/or a computer program product.

Thus, if an ESS is already appropriately structured to selectively connect auxiliary modules to their associated ESUs, then the above-described method may be retroactively introduced into a control scheme for the ESS to enhance the balancing operation thereof.

Figure 6 schematically shows a power station 600, according to an example implementation of the presently disclosed energy storage system. The converter station 600 comprises an ESS 610 such as that described in relation to the previous figures. The converter station 600 further comprises a converter 620 operatively coupled to the ESS 610 (said connection not shown).

The converter 620 may be further connected to a power grid (not shown) such that energy from the power grid can be stored in the ESS 610 and/or energy stored in the ESS 610 can be provided to the power grid via the converter 620. In an example, the ESS 610 and the converter 620 may be parts of an enhanced STATCOM (E-STATCOM) system.

It will be appreciated that the foregoing description has only covered a number of illustrative examples falling within the scope of the present disclosure, without necessarily defining the full breadth thereof. For the avoidance of doubt, the scope of the present disclosure is to be defined by the following independent claims, wherein some optional refinements are laid out in the following dependent claims.

## Claims

1. An energy storage system, ESS, for providing energy support to a power grid, comprising:
a plurality of energy storage units, ESUs, configured to store electrical energy;
one or more auxiliary modules configured to provide auxiliary functions for at least one of the plurality of ESUs; and
a controller configured to balance the energy stored in the ESUs;
wherein an auxiliary module of the one or more auxiliary modules is powered by an internal auxiliary power supply, APS, coupled to the ESU; and
wherein the controller is configured to balance the energy stored in the ESUs by selectively drawing power from said at least one of the plurality of ESUs via the internal APS.

2. The ESS according to claim 1, further comprising an external APS configured to provide power from an external power source, wherein the auxiliary module is additionally powered by the external APS, coupled to the external power source.

3. The ESS according to claim 2, wherein the external power source is a grounded power supply, and the external APS galvanically isolates the ESU from the grounded power supply.

4. The ESS according to claim 2 or claim 3, further comprising a redundancy module configured to connect the auxiliary module to the internal APS and the external APS, and to regulate an amount of power drawn from each of the internal APS and the external APS.

5. The ESS according to claim 4, wherein the redundancy module comprises a pair of diodes configured to respectively connect each of the internal APS and the external APS to the auxiliary module.

6. The ESS according to any preceding claim, wherein the auxiliary module is connected to the ESU via a DC-DC power supply.

7. The ESS according to claim 6, wherein the DC-DC power supply is configured with an output voltage to the redundancy module that is higher than the voltage of the grounded power supply.

8. The ESS according to any claim 6 or claim 7, wherein the controller is configured to turn on the DC-DC power supply in response to determining that the ESU is to be balanced.

9. The ESS according to any preceding claim, wherein the auxiliary module further comprises a balancing resistor configured to increase the power consumed by the auxiliary module during operation thereof.

10. The ESS according to claim 9, where the balancing resistor is selectively engaged or varied based on a desired power consumption of the auxiliary module.

11. A method for controlling the energy stored in energy storage units, ESUs, of an energy storage system, ESS, according to any preceding claim, comprising:
determining that an ESU is to be discharged as part of a balancing procedure;
in response to determining that the ESU is to be discharged, selectively drawing power from the ESU via an internal APS coupling said ESU to an auxiliary module such that the auxiliary module is powered by the drawn power.

12. A converter station comprising an energy storage system, ESS, according to any of claims 1 to 10.
